# EUROPEAN PATENT SPECIFICATION

(11) **EP 0 414 325 B1**
(45) Date of publication and mention of the grant of the patent: **07.12.1994**
(21) Application number: 90202250.8
(22) Date of filing: 21.08.1990
(51) Int. Cl.: B60F 5/00, B62D 55/04

(54) **A vehicle suitable for on- and off-road use**
Strassen- und geländegängiges Kraftfahrzeug
Véhicule utilisable sur route et hors route

(30) Priority: 25.08.1989 NL 8902162
(43) Date of publication of application: 27.02.1991
(73) Proprietor: VERENIGDE BEDRIJVEN VAN DEN BERG HEERENVEEN HOLDING B.V., NL-8445 PK Heerenveen (NL)
(72) Inventor: Welling, Engbert, NL-8465 PL Oudehaske (NL)
(74) Representative: Mommaerts, Johan Hendrik, Dipl.-Phys.

(56) References cited:
- WO-A-79/00118
- DE-A- 2 811 675
- FR-A- 615 622
- GB-A- 277 062
- GB-A- 386 987
- US-A- 1 443 963
- US-A- 1 550 982
- US-A- 2 341 883
- US-A- 4 204 583

## Description

The invention relates to a vehicle suitable for on- and off-road use as defined in the preamble of claim 1.

From WO 79/00118 a vehicle of this kind is known, which is provided with a telescoping arm carrying a cab for a driver, said vehicle being used as a tractor for agricultural implements such as ploughs, and said arm allowing these driver to position the cab so that he has an optimal view of said implements.

For performing special operations, in particular measuring, soil sounding and drilling operations, this prior art vehicle is not suitable. For such operations, the load of the vehicle and additional forces created by the operation in question should be directly transferred towards the soil surfuce, and, moreove, the vehicle must be levelled before the operation can be started. The current vehicles for such purposes comprise, to that end, extendable and retractable feet, but, before driving towards a next point, these feet are to be retracted and, on arriving in this next point, are to be extended again, which reduces the effective operation time considerably. Moreover such feet will concentrate the substantial vehicle weight (which should be sufficient for compensating the forces caused by sounding or drilling etc.) on a relatively small surface, which will lead to damaging the soil surface and possibly to instability of the support and thus of the levelling of the vehicle.

It is an object of the invention to provide a vehicle for these purposes not having the disadvantages of the current vehicles, and, according to the invention, a vehicle of the kind mentioned in the preamble of claim 1 is provided to that end with the additional features specified in the characterizing part of claim 1.

Such a vehicle can be driven from point to point on the tracks only, and before starting a next operation only the levelling of the vehicle is to be corrected. Thus the operation can be considerably accelerated. Moreover the load is distributed by the tracks over a substantially larger soil surface, thus avoiding an undue damaging thereof.

The auxiliary frames can be designed for being mounted below an existing vehicle.

The invention will be elucidated below by reference to a drawing, showing in:
Fig. 1 a lateral view of a motor vehicle provided, according to the invention, of an additional drive; and
Fig. 2 a simplified block diagram of control means for said drive.

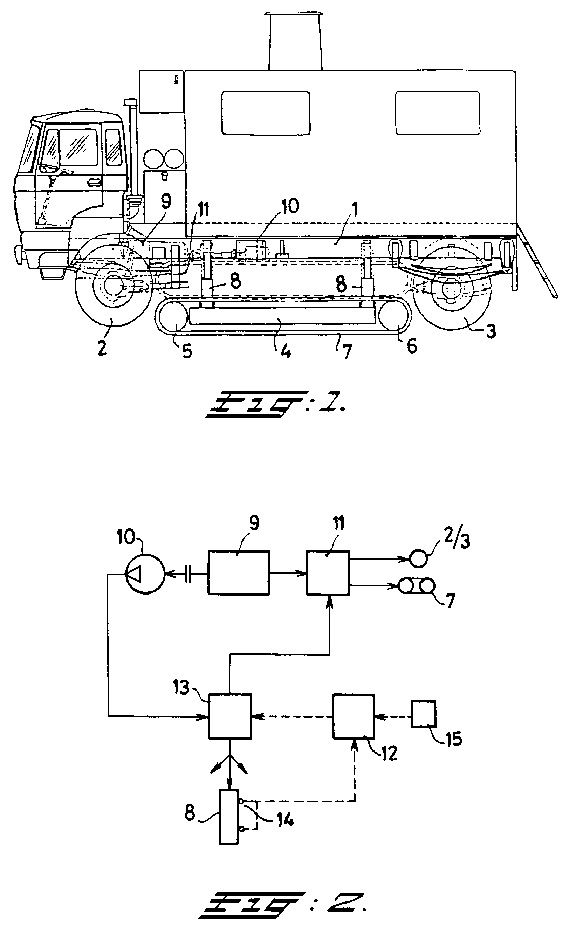

Fig. 1 shows a motor vehicle constructed as a soil sounding vehicle. In contrast to the current sounding vehicles, this vehicle is constructed as a two-axle lorry.

The frame 1 of this vehicle is provided with front wheels 2 and rear wheels 3, which, in the case shown, can be driven both; however, this is not strictly necessary.

Below the frame 1 and between the wheels 2 and 3 an auxiliary frame 4 is provided at each side, said auxiliary frames 4 each being provided with two guiding wheels 5 and 6 on which a track 7 is guided, and, if required, between the guiding wheels 5 and 6 additional support rolls for the intermediate portion of the track in question can be provided.

Each auxiliary frame 4 is coupled with the frame 1 by means of a mechanical construction provided at its extremities, comprising hydraulic cylinders 8, to which cylinders 8 pressurized oil can be supplied which is provided by an oil pump 10 coupled with the vehicle engine 9.

When the vehicle is to drive on a road, the auxiliary frames 4 are to be retracted, as indicated in Fig. 1 with interrupted lines. When the wheel drive becomes insufficient for moving the vehicle on a difficultly passable ground surface, the auxiliary frames 4 are brought,by means of the hydraulic cylinders 8, in the position shown, after which the wheel drive can be interrupted, and the guiding wheels 5 and 6 for the caterpillar tracks 7 are being driven.

This drive can take place directly from the engine 9 with the intermediary of a reduction transmission and a differential, and, by braking one differential axle the speed of the tracks can be controlled in the known manner for allowing the vehicle to be steered. It is also possible to provide, in the auxiliary frames, hydraulic motors for the caterpillar tracks which are supplied from the liquid pump 10 or a similar pump with pressurized oil. It is also possible to arrange the auxiliary frames 4 and to lower them by means of the cylinders 8 in such a manner that the steering wheels of the front axle 2 and the wheels of the rear axle 3 remain on the ground so as to allow to steer the vehicle, and to improve the off-road stability.

It will be clear that the auxiliary frames 4 or the hydraulic cylinders will be provided with means for determining the extreme positions thereof, and that the hydraulic system is so that, in said extreme positions, the required blocking thereof will be obtained. It is, of course, also possible to replace the hydraulic cylinders 8 by a comparable screw drive, but a hydraulic drive has practical advantages.

When the vehicle is to be used for performing soil sounding or drilling operations, the frame thereof should be placed in a horizontal position. With the current vehicles for this purpose this is done by means of extendable jacks. In the present case, use can be made for this purpose of the hydraulic cylinders 8, to which, as desired, oil is to be separately supplied until the desired horizontal position has been reached.

Fig. 2 shows a simplified block diagram of the driving and control means for such a vehicle.

The engine 9 can be selectively coupled by means of a shiftable transmission 11 with the wheels 2 and/or 3 or with the drive for the tracks 7. The oil pump 10 is coupled with the engine 9, if required by means of current control means.

A general control stage 12 provides the desired control. The pump 10 delivers pressurized oil to a distributor 13 which, under control of the control stage 12, can supply pressurized oil to the cylinders 8, sensors 14 for the extreme positions of the auxiliary frame 4 being connected with the control stage for switching off the oil supply and locking the auxiliary frame 4. Moreover the distributor 13 is coupled with the transmission 11, in order to switch, after lowering or retracting the auxiliary frame 4, the transmission accordingly.

A leveling apparatus 15 is connected with the control stage 12 for orienting the frame 1 horizontally by means of the distributor 13 by such a separate oil supply towards the different cylinders 8 that the vehicle will be horizontally directed.

It will be clear that such a control system can be realized and extended in many different ways.

It is, for instance, possible to lower the auxiliary frames 4 so far that the driven wheels remain in contact with the bottom. In particular the cylinders 8 (without being blocked) can be maintained under such a pressure that the caterpillar tracks 7 will be pushed with a given force against the bottom, in order to take up a portion of the load by the tracks 7, these tracks then following inegalities of the field in order to avoid that the wheels 2 or 3 will loose contact with the bottom. In that case the track speed should be adapted to the wheel speed.

It will be clear that the auxiliary frames can also be used in the case of three-axle vehicles. In that case it can often be favourable to use one or more additional jacks for leveling the vehicle.

An additional advantage of these track frames 7 is that, in the case of lighter vehicles, they will provide an increase of the mass,which is required in the case of soil sounding operations and the like for providing the required counter pressure.

## Claims

1. A vehicle for on- and off-road use, provided with a frame (1) with wheels (2, 3) to be driven by the vehicle engine (9), below which frame (1), at each side between the front and rear wheels (2, 3), an auxiliary frame (4) is provided, which auxiliary frames (4) are each provided with guiding wheels (5, 6) adapted to be driven by hydraulic motors, tracks (7) being guided on said wheels (5, 6), which frames (4) are vertically displaceable in respect of said vehicle frame (1) by means of lifting cylinders (8) arranged near the extremities of the respective auxiliary frames (4), and adapted to be operated in order to contact said tracks (7) with the bottom and to be maintained under a pressure allowing the tracks (7) to follow inegalities of the bottom, control means (11..14) being present for controlling the liquid supply towards the lifting cylinders (8) and for controlling the driving means for the tracks (7), all this in such a manner that the auxiliary frames (4) can be locked in a retracted and in a lowered position, the tracks (7), in the latter position, being brought in contact with the bottom, **characterized** in that
for adapting the vehicle for being used for measuring, sounding or drilling operations
- said lifting cylinders (8) are adapted to be individually operated by said control means (11..15), and
- said control means (11..15) are furthermore adapted for lowering the auxiliary frames (4) still further so as to lift the vehicle wheels (2, 3) from the bottom, and for placing the vehicle in a horizontal position by means of the separately operated lifting cylinders (8) when said vehicle is supported on the tracks (7) only.

2. An auxiliary frame for a vehicle according to claim 1, designed for being mounted below an existing motor vehicle.

## Patentansprüche

1. Straßen- und geländegängiges Kraftfahrzeug, mit einem Rahmen (1) mit durch den Fahrzeugmotor (9) angetriebenen Rädern (2, 3), wobei unter dem Rahmen (1) auf jeder Seite zwischen den Vorder- und Hinterrädern (2, 3) ein Hilfsrahmen (4) angeordnet ist, wobei die Hilfsrahmen (4) jeweils mit Führungsrädern (5, 6) versehen sind, die durch hydraulische Motoren antreibbar sind, mit auf den Rädern (5, 6) geführten Raupen (7), wobei die Rahmen (4) vertikal in Bezug zu dem Fahrzeugrahmen (1) mittels Hubzylindern (8) verstellbar sind, die nahe den Enden der jeweiligen Hilfsrahmen (4) angeordnet und dazu bestimmt sind, so betätigt zu werden, daß die Raupen (7) den Boden berühren, und unter einem Druck gehalten zu werden, der es den Raupen (7) erlaubt, Unebenheiten des Bodens zu folgen, wobei Steuereinrichtungen (11...14) vorgesehen sind, um die Flüssigkeitszufuhr zu den Hubzylindern (8) zu steuern und um die Antriebseinrichtungen für die Raupen (7) zu steuern, wobei all dies so erfolgt, daß die Hilfsrahmen (4) in einer zurückgezogenen und einer abgesenkten Position verriegelt werden können, wobei die Raupen (7) in der letztgenannten Position in Berührung mit dem Boden gebracht sind, dadurch gekennzeichnet, daß zur Anpassung des Fahrzeugs zur Verwendung für Vermessungs-, Sondier- oder Bohrarbeiten
- die Hubzylinder (8) angepaßt sind, um individuell durch die Steuereinrichtungen (11..15) betätigt zu werden, und
- die Steuereinrichtungen (11..15) darüberhinaus angepaßt sind, um die Hilfsrahmen (4) noch weiter als zum Anheben der Fahrzeugräder (2, 3) von dem Boden abzusenken und um das Fahrzeug in eine horizontale Position mittels der gesondert betätigten Hubzylinder (8) zu bringen, wenn das Fahrzeug nur auf die Raupen (7) abgestützt ist.

2. Hilfsrahmen für ein Fahrzeug nach Anspruch 1, ausgeführt für die Anbringung unter einem vorhandenen Kraftfahrzeug.

## Revendications

1. Véhicule pour un usage sur route et hors route, muni d'un châssis (1) avec des roues (2, 3) devant être entraînées par le moteur (9) de véhicule, sous lequel châssis (1), de chaque côté entre les roues avant et arrière (2, 3), un châssis auxiliaire (4) est prévu, lesquels châssis auxiliaires (4) sont chacun munis de roues de guidage (5, 6) prévues pour être entraînées par des moteurs hydrauliques, des chenilles (7) guidées sur lesdites roues (5, 6), lesquels châssis (4) peuvent se déplacer verticalement par rapport audit châssis (1) de véhicule au moyen de vérins de levage (8) disposés près des extrémités des châssis auxiliaires (4) respectifs, et prévus pour être actionnés afin de mettre lesdites chenilles (7) en contact avec le sol et pour être maintenus sous une pression permettant aux chenilles (7) de suivre les irrégularités du sol, des moyens de commande (11 à 14) étant prévus pour commander l'alimentation en liquide vers les vérins de levage (8) et pour commander les moyens d'entraînement des chenilles (7), le tout d'une façon telle que les châssis auxiliaires (4) peuvent être verrouillés dans une position rétractée et dans une position abaissée, les chenilles (7), dans cette dernière position, étant amenées en contact avec le sol, caractérisé en ce que pour adapter le véhicule à une utilisation pour des opérations de mesure, de sondage ou de forage,
- lesdits vérins de levage (8) sont prévus pour être actionnés individuellement par lesdits moyens de commande (11 à 15), et
- lesdits moyens de commande (11 à 15) sont en outre prévus pour abaisser les châssis auxiliaires (4) encore plus de façon à soulever les roues (2,3) du véhicule du sol, et pour placer le véhicule dans une position horizontale au moyen de vérins de levage (8) actionnés séparément quand ledit véhicule est supporté sur les chenilles (7) uniquement.

2. Châssis auxiliaire pour un véhicule selon la revendication 1, conçu pour être installé sous un véhicule à moteur existant.
